# EUROPÄISCHE PATENTSCHRIFT

(11) **EP 0 394 718 B1**
(45) Veröffentlichungstag und Bekanntmachung des Hinweises auf die Patenterteilung: **13.01.1993**
(21) Anmeldenummer: 90106451.9
(22) Anmeldetag: 04.04.1990
(51) Int. Cl.: B01J 19/32, B01D 53/18, F24F 3/147, F28F 25/08

(54) **Rieseleinbauelement**
Trickle insert
Chicane de ruissellement

(30) Priorität: 07.04.1989 DE 8904345 U
(43) Veröffentlichungstag der Anmeldung: 31.10.1990
(73) Patentinhaber: Balcke-Dürr AG, D-40882 Ratingen (DE)
(72) Erfinder: Streng, Andreas, Dipl.-Ing., 4030 Ratingen (DE)
(74) Vertreter: Stenger, Watzke & Ring Patentanwälte

(56) Entgegenhaltungen:
- EP-A- 0 209 898
- EP-A- 0 361 225
- GB-A- 1 106 566
- GB-A- 2 068 256

## Beschreibung

Die Erfindung betrifft ein Rieseleinbauelement zur Übertragung von Wärme und/oder Stoff zwischen einem Gas und einer Flüssigkeit, die im Kreuz- und/oder Gegenstrom geführt sind.

Rieseleinbauelemente zur Übertragung von Wärme und/oder Stoff zwischen einem Gas und einer Flüssigkeit, die im Kreuz- und/oder Gegenstrom geführt sind, sind insbesondere für Kühltürme bekannt. Hierbei wird die Flüssigkeit mittels geeigneter Verteilelemente möglichst gleichmäßig auf die aus einer Mehrzahl von nebeneinander angeordneten Platten zusammengesetzten Rieseleinbauten aufgebracht, wobei sich auf der Fläche der einzelnen Platten ein Rieselfilm ausbildet, der entlang der Kanäle bzw. Kanalabschnitte strömt. Die Ausbildung dieser Kanäle bzw. Kanalabschnitte ermöglicht hierbei eine Ausbreitung der jeweils zwischen zwei benachbarten Platten verlaufenden Fluidströme quer zu den Hauptströmungsrichtungen, so daß eine Vergleichmäßigung der auf die Oberseite der Platten aufgebrachten Flüssigkeit in waagerechter Richtung erfolgt, und zwar unabhängig davon, ob das Gas durch einen seitlichen Eintritt in die Rieseleinbauten im Kreuzstrom oder durch einen Eintritt von unten im Gegenstrom zur Flüssigkeit geführt wird. In beiden Fällen findet zwischen den beiden Fluiden ein gekoppelter Wärme- und Stoffübergang statt. Als Prozeßziel können die Flüssigkeit und/oder das Gas abgekühlt, Schadgase in der Flüssigkeit absorbiert oder das Gas befeuchtet werden.

Die filmausbildenden Rieseleinbauelemente bestehen aus einer Mehrzahl geprägter Platten oder Kunststoffolien, die durch Kleben oder Verknüpfen zusammengesetzt sind und Ausformumgen zur Bildung von Kanälen oder Kanalabschnitten aufweisen. Bei der Ausbildung durchgehender Strömungskanäle verlaufen diese schräg zur Senkrechten. Die einzelnen Platten werden beim Zusammenbau wechselweise um 180° gedreht, so daß zickzackförmige Kanäle entstehen. Hierdurch werden eine gleichmäßigere Verteilung der in Kontakt gebrachten Fluide über dem Strömungsquerschnitt und ein verlängerter Strömungsweg erzielt. Zusätzliche Feinprofilierungen, beispielsweise Ausprägungen in der Größenordnung der Rieselfilmstärken, führen zu einer weiteren Intensivierung der Wärme- und/oder Stoffübertragung.

Um diesen seit längerem bekannten Entwicklungsstand weiterhin zu verbessern, wird in der EP-A- 0 115 455 statt eines geraden, jedoch schräg verlaufenden Kanalverlaufes die Ausbildung sinus- oder serpentinförmiger Kanalausprägungen beschrieben, um bei vergleichsweise niedrigem Druckverlust gleich hohe oder sogar höhere Übertragungsleistungen zu erreichen.

In einer weiteren Ausführungsform gemäß der EP-A 0 056 911 wird zur weiteren Intensivierung des Prozesses bei Verwendung von gewellten Platten vorgeschlagen, diese mit geeigneten Feinprofilierungen zu versehen. Eine zusätzliche Maßnahme in dieser Richtung ist in der EP-A 0 117 076 dargestellt, wonach auf gewellten Platten vertikale Leitelemente angebracht sind.

In der EP-A 0 070 676 werden Plattenverformungen beschrieben, die sich aus der Überlagerung von zwei oder mehreren sinusförmigen Wellungen ergeben, wodurch erstmals eine räumliche Strömungsführung erzielt wird.

Die aus der EP-A 0 115 455 bekannten, sich überkreuzenden sinusförmigen Kanalführungen haben sich zwar gegenüber den zickzackförmigen Kanalführungen als strömungstechnisch überlegen erwiesen; die Vorteile fallen jedoch wegen der weitgehenden geometrischen Ähnlichkeit der Konstruktionen nur gering aus. Einfach gewellte Ausführungen, selbst mit Feinprofilierung gemäß der EP-A 0 056 911, können die geforderten hohen Leistungswerte wegen der relativ geringen volumenspezifischen Übertragungsfläche nicht erreichen. Diese werden zwar durch vertikale Leitelemente gemäß der EP-A 0 117 076 verbessert; bei dieser Konstruktion wird jedoch eine Querverteilung der den Rieseleinbauelementen zugeleiteten Fluide verhindert, was sich besonders bei ungleichmäßiger Beaufschlagung der Rieseleinbauelemente negativ auswirkt. Zwar können diese Nachteile durch mehrfach gewellte Platten gemäß der EP-A 0 070 676 teilweise aufgehoben werden, jedoch führen diese Konstruktionen infolge der Wellungen zu ungeordneten bzw. ungerichteten Strömungsformen, so daß die Fluidströme nicht mehr in festen Bahnen wie bei den sich kreuzenden Kanälen geführt werden. Eine schlechtere Querverteilung ist die Folge. Zusätzlich entstehen an den Berührungspunkten benachbarter Platten infolge der überlagerten Wellungen eine Vielzahl spitzwinklig zulaufender Zwickelräume mit verringerten Fluidstromdichten, so daß trotz der hohen volumenspezifischen Übertragungsflächen die angestreben hohen Übertragungsleistungen nicht erreicht werden. Außerdem neigen die an den Berührungspunkten spitzwinklig aufeinander zulaufenden Kanalwandungen zu einer erhöhten Verschmutzung infolge Ablagerungen, was im Laufe des Betriebseinsatzes mit einem zunehmenden Leistungsabfall verbunden ist.

In der GB-A 1 106 566 ist ein aus mehreren geformten Platten zusammengesetztes Rieseleinbauelement zur Übertragung von Wärme und/oder Stoff zwischen einem Gas und einer Flüssigkeit beschrieben, welches über eine Mehrzahl parallel verlaufender Kanäle zur Hindurchleitung der Fluidströme verfügt. Die Kanäle verlaufen im wesentlichen unter einem Winkel zur vertikalen Hauptströmungsrichtung der Flüssigkeit. Die einzelnen Platten sind zu Paketen geschichtet, so daß die Kanäle zur Ausbreitung der Flüssigkeit durch Kanalausprägungen jeweils zweier benachbarter Platten gebildet werden. Die einzelnen Kanäle verfügen über feine Faltungen, die in etwa rechtwinklig zur Richtung der Kanäle verlaufen. Bei diesen Faltungen handelt es sich um eine Feinprofilierung der Kanaloberfläche im Bereich zwischen 0,5 und 3 mm, die den Wärme- und Stoffaustausch verbessert.

Ähnlich aufgebaute Rieseleinbauelemente in Form einzelner Platten sind schließlich auch aus der EP-A 0 209 898 bekannt. Bei diesen Platten laufen die einzelnen Kanäle jedoch nicht geradlinig, sondern sind innerhalb der von den Hauptausdehnungsrichtungen der Platten gebildeten Ebene in Gestalt einer Mehrzahl sinusförmig verlaufender Kanäle ausgebildet. Die Schichtung der einzelnen Platten ist derart, daß sich die sinusförmigen Kanäle benachbarter Platten an den Berührungsstellen kreuzen.

Der Erfindung liegt die Aufgabe zugrunde, ein Rieseleinbauelement zu schaffen, welches, bezogen auf einen vorgegebenen Querschnitt, Druckverlust und Materialeinsatz, eine wesentlich höhere Wärme- und Stoffübertragungsleistung bei gleichzeitig verringerter Verschmutzungsneigung erreicht.

Zur Lösung dieser Aufgabenstellung wird zunächst ein Rieseleinbauelement der eingangs genannten Art vorgeschlagen, welches durch die folgenden Merkmale gekennzeichnet ist:
a) eine Mehrzahl nebeneinander im wesentlichen vertikal angeordneter Platten, welche
b) Ausprägungen in Form von Kanälen oder Kanalabschnitten zur Hindurchleitung der genannten Fluidströme aufweisen;
c) die Mittellinien der Kanalausprägungen jeder einzelnen Platte weichen von der Vertikalen ab und ermöglichen somit eine Ausbreitung der jeweils zwischen zwei benachbarten Platten verlaufenden Fluidströme quer zu den Hauptströmungsrichtungen der am Austausch beteiligten Fluide;
d) die mit den Kanalausprägungen versehenen Platten sind zusätzlich quer zu den beiden in einer vertikalen Ebene liegenden Hauptausdehnungsrichtung der Platten derart verformt, daß der räumliche Verlauf der Mittellinien der Kanalausprägungen die durch die Hauptausdehnungsrichtungen der Platten definierte vertikale Ebene auch verläßt.

In der älteren europäischen Patentanmeldung mit der Veröffentlichungsnummer 0 361 225, welche einen Stand der Technik nach Artikel 54(3) EPÜ darstellt, ist ein aus mehreren gleichartigen Platten zusammensetzbares Rieseleinbauelement zur Wärme- und Stoffübertragung zwischen einem Gas und einer Flüssigkeit beschrieben. Die einzelnen Platten weisen parallel zueinander verlaufende Kanäle auf, die ihre Ausrichtung in zwei unterschiedlichen Achsenrichtungen ändern. Dabei beschreibt jeder Punkt im Laufe eines fiktiven Durchfahrens des Kanals in Längsrichtung eine überlagerte Kreisbewegung. Insgesamt liegt also ein schraubenförmiger Verlauf der Kanalausprägungen vor.

Dieser Sachverhalt ist beispielsweise in Fig. 23 sowie Spalte 9, Zeilen 14 bis 24 dieser älteren europäischen Patentanmeldung beschrieben.

Im Hinblick auf den genannten Stand der Technik nach Artikel 54(3) EPÜ ist die Lösung nach der Erfindung ferner gekennzeichnet durch die folgenden Merkmale:
a) eine Mehrzahl nebeneinander im wesentlichen vertikal angeordneter Platten, welche
b) Ausprägungen in Form von Kanälen oder Kanalabschnitten zur Hindurchleitung der genannten Fluidströme aufweisen;
c) die Mittellinien der Kanalausprägungen jeder einzelnen Platte weichen von der Vertikalen ab und ermöglichen somit eine Ausbreitung der jeweils zwischen zwei benachbarten Platten verlaufenden Fluidströme quer zu den Hauptströmungsrichtungen der am Austausch beteiligten Fluide;
d) die Kanalausprägungen verlaufen zur Hindurchleitung der Fluidströme zwischen Flüssigkeitseintritt und Flüssigkeitsaustritt im wesentlichen geradlinig bezüglich der Ebene der beiden Hauptausdehnungsrichtungen der Platten;
e) die mit den Kanalausprägungen versehenen Platten sind zusätzlich quer zu den beiden in einer vertikalen Ebene liegenden Hauptausdehnungsrichtungen der Platten derart verformt, daß der räumliche Verlauf der Mittellinien der Kanalausprägungen die durch die Hauptausdehnungsrichtungen der Platten definierte vertikale Ebene auch verläßt.

Durch die Erfindung ergibt sich ein räumlicher Verlauf der Kanal-Mittellinien, wodurch sich erhebliche strömungstechnische Verbesserungen und eine Vergrößerung der für den Wärme- und/oder Stoffaustausch zur Verfügung stehenden Oberfläche ergeben. Das erfindungsgemäße Rieseleinbauelement weist nach dem Verkleben oder Verknüpfen der geprägten und gewellten Platten eine hohe Formstabilität und Druckbelastbarkeit auf. Die beim Verkleben oder Verknüpfen entstehenden, dreidimensional im Raum verlaufenden Kanäle bzw. Kanalabschnitte führen durch ihre strömungstechnisch vorteilhafte Ausführung zu vergleichsweise niedrigen Druckverlusten und hohen Übertragungsleistungen. Da sich benachbarte Kanalausprägungen in bekannter Weise kreuzen, durch die zusätliche räumliche Führung jedoch ein verlängerter Strömungsweg entsteht, wird mit der Erfindung eine verbesserte Querverteilung bzw. Quervermischung der in Kontakt stehenden Fluidströme erzielt, wodurch sich eine weitere Verbesserung des Verhältnisses der Übertragungsleistung zu Druckverlust ergibt. Im Vergleich zu Rieseleinbauelementen der bekannten Bauart ist eine geringere Verschmutzungsneigung zu verzeichnen. Die erfindungsgemäßen, dreidimensional verformten Platten bestehen vorzugsweise aus Kunststoffmaterial und können in bekannter Weise im Vakuumtiefziehverfahren hergestellt werden, so daß auch beliebige Feinprofilierungen auf einfache Weise erzielt werden können.

Gemäß einem weiteren Merkmal der Erfindung sind die Platten halbkreis-, sinus- oder serpentinförmig gewellt. Durch diese Wellung ergibt sich wegen kontinuierlichen Kanalverlaufes ein gutes Strömungsverhalten des Rieseleinbauelements.

Bei einer bevorzugten Weiterbildung der erfindungsgemäßen Rieseleinbauelements weisen die Platten zusätzlich ein Feinprofilierung der Oberfläche auf.

Eine vorteilhafte Weiterbildung kann weiterhin dadurch erzielt werden, daß die Mittelachsen der Wellung der mit Kanalausprägungen versehenden Platten sich vertikal zwischen Ein- und Austritt entsprechend der Hauptströmungsrichtung der Flüssigkeit erstrecken.

Weiterhin wird mit der Erfindung vorgeschlagen, daß die gewellten Platten Kanalausprägungen zur Hindurchleitung der Fluidströme aufweisen, die schräg und im wesentlichen gerade zur vertikalen Hauptströmungsrichtung der Flüssigkeit verlaufen.

Schließlich wird mit der Erfindung vorgeschlagen, daß die Kanalausprägungen am Ein- und Austritt der Fluidströme vorzugsweise einen Winkel von 30° zur vertikalen Hauptströmungsrichtung der Flüssigkeit aufweisen.

Auf der Zeichnung ist ein Ausführungsbeispiel eines erfindungsgemäßen Rieseleinbauelements dargestellt, und zwar zeigen:
Abb. 1 eine Seitenansicht eines aus mehreren Platten bestehenden Rieseleinbauelements,
Abb. 2 einen schräg verlaufenden Schnitt durch eine Platte des in Abb.1 dargestellten Rieseleinbauelements, und zwar gemäß der Schnittlinie A-A in Abb. 1,
Abb. 3 einen Querschnitt durch diese Platte gemäß der Schnittlinie B-B in Abb.2 und
Abb. 4 eine perspektivische Darstellung des in Abb.1 dargestellten Rieseleinbauelements, wobei der vereinfachten Darstellung wegen nur drei benachbarte Platten gezeichnet sind.

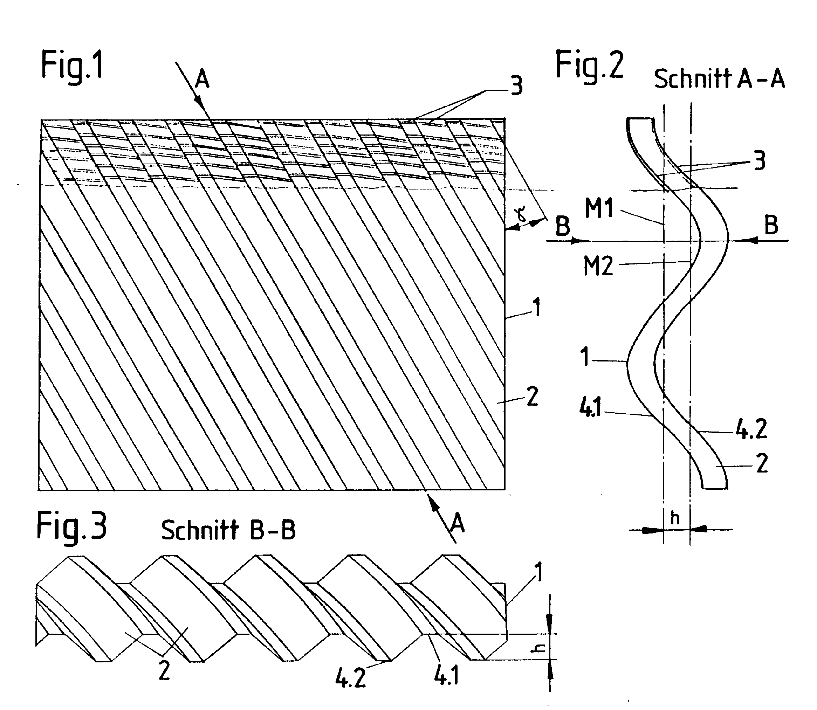

Das zum Einsatz in Kühltürmen, Schadgasabsorbern oder Luftklimatisierungsanlagen bestimmte Rieseleinbauelement ist aus einer Mehrzahl von geprägten Platten 1 zusammengesetzt, von denen die außenliegende Platte 1 in einer Ansicht dargestellt ist. Die Darstellung läßt erkennen, daß im Querschnitt trapezförmige Kanalausprägungen 2 vorhanden sind, die beim Ausführungsbeispiel unter einem Winkel γ von 30° zur Vertikalen verlaufen. Im oberen Bereich der Abbildungen 1 und 2 ist eine Feinprofilierung 3 eingezeichnet, die zu einer verbesserten Oberflächenbenetzung und zur Erhöhung des Turbulenzgrades führt.

Die Abb.2 zeigt, daß die zur Bildung des Rieseleinbauelements verwendeten Platten 1 zusätzlich quer zu den beiden Hauptausdehnungsrichtungen der Platte 1 verformt sind, und zwar beim Ausführungsbeispiel durch eine sinusförmige Wellung. Diese Wellung wird in strömungstechnisch vorteilhafter Weise aus zwei parallel um die Trapezhöhe h verschobene Sinusfunktionen gebildet, die den schmalen Seitenbegrenzungswänden 4.1 und 4.2 der Kanalausprägungen 2 in der Seitenansicht entsprechen.

Die Abb.3 verdeutlicht die Verformung der Platte 1 in der Draufsicht, wobei der besseren Übersicht wegen die Feinprofilierung 3 nicht gezeichnet wurde. Die Kanalausprägungen 2 verlaufen somit nicht nur schräg zur Seite, sondern entsprechend der gewählten Wellengeometrie zusätzlich in die Tiefe.

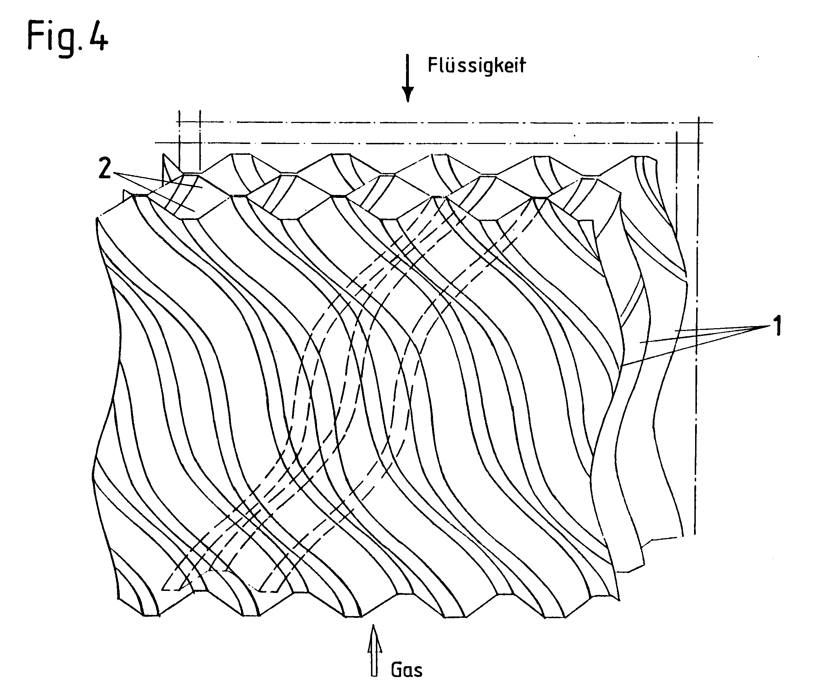

Die dargestellten Platten 1 werden in fertigungstechnisch vorteilhafter Weise aus Kunststoffolien im Vakuumtiefziehverfahren hergestellt. Für den Zusammenbau des Rieseleinbauelements wird jede zweite Platte 1 um die vertikalen Mittelachsen M1 und M2 (siehe Abb.2) um 180° gedreht und an die vorhergehende Platte 1 in bekannter Weise angeklebt oder mit dieser mittels Ausformungen verknüpft. Damit entstehen sich überkreuzende, im Querschnitt trapezförmige Kanalausprägungen 2 zwischen benachbarten Platten 1, wie es die Abb.4 in einer perspektivischen Darstellung verdeutlicht. Die gestrichelten Linien zeigen einen gewellten bzw. gewundenen Kanalverlauf der zweiten Platte 1. Durch das Zusammenwirken der Kanalausprägungen 2 benachbarter Platten 1 wird den Fluidströmungen eine räumlich serpentinförmige Strömungsrichtung in vorgegebenen festen Bahnen aufgezwungen.

In vorteilhafter Weise können anstatt der in Abb.1 dargestellten, gerade und schräg verlaufenden Kanalausprägungen 2 auch sinus- oder serpentinförmig verlaufende Kanalausprägungen ausgebildet werden, die dann zusätzlich von den sinus- und serpentinförmigen Wellungen der Platten 1 überlagert werden.

Eine weitere vorteilhafte Ausführungsform weist gerade, vertikale Kanalausprägungen mit relativ kurzer Lauflänge auf, die zur Förderung einer verbesserten Querverteilung der Fluide abschnittsweise quer versetzt sind und eine zusätzliche sinusförmige Wellung aufweisen.

### Bezugszeichenliste :

1 Platte
2 Kanalausprägung
3 Feinprofilierung
4.1 Seitenbegrenzungswand
4.2 Seitenbegrenzungswand
h Trapezhöhe
M1 Mittelachse
M2 Mittelachse
γ Winkel

## Patentansprüche (Patentansprüche für folgende(n) Vertragsstaat(en): BE, ES, FR, GB, NL)

1. Rieseleinbauelement zur Übertagung von Wärme und/oder Stoff zwischen einem Gas und einer Flüssigkeit, die im Kreuz- und/oder Gegenstrom geführt sind,
**gekennzeichnet durch**
die folgenden Merkmale:
a) eine Mehrzahl nebeneinander im wesentlichen vertikal angeordneter Platten (1), welche
b) Ausprägungen (2) in Form von Kanälen oder Kanalabschnitten zur Hindurchleitung der genannten Fluidströme aufweisen;
c) die Mittellinien der Kanalausprägungen (2) jeder einzelnen Platte (1) weichen von der Vertikalen ab und ermöglichen somit eine Ausbreitung der jeweils zwischen zwei benachbarten Platten (1) verlaufenden Fluidströme quer zu den Hauptströmungsrichtungen der am Austausch beteiligten Fluide;
d) die mit den Kanalausprägungen (2) versehenen Platten (1) sind zusätzlich quer zu den beiden in einer vertikalen Ebene liegenden Hauptausdehnungsrichtung der Platten (1) derart verformt, daß der räumliche Verlauf der Mittellinien der Kanalausprägungen (2) die durch die Hauptausdehnungsrichtungen der Platten (1) definierte vertikale Ebene auch verläßt.

2. Rieseleinbauelement nach Anspruch 1, dadurch gekennzeichnet, daß die Platten (1) halbkreis-, sinus- oder serpentinförmig gewellt sind.

3. Rieseleinbauelement nach Anspruch 1 oder 2, dadurch gekennzeichnet, daß die Platten (1) zusätzlich eine Feinprofilierung (3) der Oberfläche aufweisen.

4. Rieseleinbauelement nach mindestens einem der Ansprüche 1 bis 3, dadurch gekennzeichnet, daß die Mittelachsen (M1,M2) der Wellung der mit Kanalausprägungen (2) versehenen Platten (1) sich vertikal zwischen Eintritt und Austritt entsprechend der Hauptströmungsrichtung der Flüssigkeit erstrecken.

5. Rieseleinbauelement nach mindestens einem der Ansprüche 1 bis 4, dadurch gekennzeichnet, daß die gewellten Platten (1) Kanalausprägungen (2) zur Hindurchleitung der genannten Fluidströme aufweisen, die im wesentlichen sinus- oder serpentinförmig sich zwischen Flüssigkeitseintritt und Flüssigkeitsaustritt erstrecken.

6. Rieseleinbauelement nach mindestens einem der Ansprüche 1 bis 5, dadurch gekennzeichnet, daß die gewellten Platten (1) Kanalausprägungen (2) zur Hindurchleitung der genannten Fluidströme aufweisen, die schräg und im wesentlichen gerade zur vertikalen Hauptströmungsrichtung der Flüssigkeit verlaufen.

7. Rieseleinbauelement nach mindestens einem der Ansprüche 1 bis 6, dadurch gekennzeichnet, daß die Kanalausprägungen (2) am Eintritt und Austritt der Fluidströme vorzugsweise einen Winkel γ von 30° zur vertikalen Hauptströmungsrichtung der Flüssigkeit aufweisen.

## Patentansprüche (Patentansprüche für folgende(n) Vertragsstaat(en): AT, CH, LI, DE, IT)

1. Rieseleinbauelement zur Übertragung von Wärme und/oder Stoff zwischen einem Gas und einer Flüssigkeit, die im Kreuz- und/oder Gegenstrom geführt sind,
**gekennzeichnet durch**
die folgende Merkmale:
a) eine Mehrzahl nebeneinander im wesentlichen vertikal angeordneter Platten (1) , welche
b) Ausprägungen (2) in Form von Kanälen oder Kanalabschnitten zur Hindurchleitung der genannten Fluidströme aufweisen;
c) die Mittellinien der Kanalausprägungen (2) jeder einzelnen Platte (1) weichen von der Vertikalen ab und ermöglichen somit eine Ausbreitung der jeweils zwischen zwei benachbarten Platten (1) verlaufenden Fluidströme quer zu den Hauptströmungsrichtungen der am Austausch beteiligten Fluide;
d) die Kanalausprägungen (2) verlaufen zur Hindurchleitung der Fluidströme zwischen Flüssigkeitsentritt und Flüssigkeitsaustritt im wesentlichen geradlinig bezüglich der Ebene der beiden Hauptausdehnungsrichtungen der Platten (1);
e) die mit den Kanalausprägungen (2) versehen Platten (1) sind zusätzlich quer zu den beiden in einer vertikalen Ebene liegenden Hauptausdehnungsrichtungen der Platten (1) derart verformt, daß der räumliche Verlauf der Mittellinien der Kanalausprägungen (2) die durch die Hauptausdehnungsrichtungen der Platten (1) definierte vertikale Ebene auch verläßt.

2. Rieseleinbauelement nach Anspruch 1, dadurch gekennzeichnet, daß die Platten (1) halbkreis-, sinus- oder serpentinförmig gewellt sind.

3. Rieseleinbauelement nach Anspruch 1 oder 2, dadurch gekennzeichnet, daß die Platten (1) zusätzlich eine Feinprofilierung (3) der Oberfläche aufweisen.

4. Rieseleinbauelement nach mindestens einem der Ansprüche 1 bis 3, dadurch gekennzeichnet, daß die Mittelachsen (M1,M2) der Wellung der mit Kanalausprägungen (2) versehenen Platten (1) sich vertikal zwischen Eintritt und Austritt entsprechend der Hauptströmungsrichtung der Flüssigkeit erstrecken.

5. Rieseleinbauelement nach mindestens einem der Ansprüche 1 bis 4, dadurch gekennzeichnet, daß die gewellten Platten (1) Kanalausprägungen (2) zur Hindurchleitung der genannten Fluidströme aufweisen, die schräg zur vertikalen Hauptströmungsrichtung der Flüssigkeit verlaufen.

6. Rieseleinbauelement nach Anspruch 5, dadurch gekennzeichnet, daß die Kanalausprägungen (2) vorzugsweise einen Winkel γ von 30° zur vertikalen Hauptströmungsrichtung der Flüssigkeit aufweisen.

## Claims (Claims for the following Contracting State(s): BE, ES, FR, GB, NL)

1. A trickle furniture element for transmitting heat and/or substance between a gas and a liquid moving in cross-current and/or countercurrent to one another, characterised by the following features:
a) a number of trays (1) which are disposed adjacent one another and substantially vertically and which
b) have stamped-out parts (2) in the form of ducts or duct portions for the passage of the fluid flows;
c) the centre lines of the parts (2) in each individual tray (1) start from the vertical and therefore facilitate spreading out of the fluid flows between any two adjacent trays (1) transversely to the main flow directions of the exchange fluids, and
d) the trays having the ducts (2) are so deformed additionally transversely to the two main directions in which the trays (1) extend, such directions being disposed in a vertical plane, that the spatial pattern of the centre lines of the ducts (2) leaves the vertical plane defined by the main directions in which the trays (1) extend.

2. An element according to claim 1, characterised in that the trays (2) have a semi-circular or sinusoidal or serpentine wave shape.

3. An element according to claim 1, characterised in that the trays (1) also have a fine profiling (3) of the surface.

4. An element according to at least one of claims 1 to 3, characterised in that the central axes (M1, M2) of the waviness of the trays (1) extend vertically between the entry and exit in accordance with the main flow direction of the liquid.

5. An element according to at least one of claims 1 to 4, characterised in that the wavy trays (1) have duct-like stamped-out parts (2) for the passage of the fluid flows, such stamped-out parts extending substantially sinusoidally or in serpentine manner between the liquid entry and the liquid exit.

6. An element according to at least one of claims 1 to 5, characterised in that the wavy trays (1) have stamped-out duct parts (2) for the passage of the fluid flows, such stamped-out parts extending inclinedly substantially straight relatively to the vertical main flow direction of the liquid.

7. An element according to at least one of claims 1 to 6, characterised in that the stamped-out channel parts (2) preferably have at the entry and exit of the fluid flows an angle of 30° to the vertical main flow direction of the liquid.

## Claims (Claims for the following Contracting State(s): AT, CH, LI, DE, IT)

1. A trickle furniture element for transmitting heat and/or substance between a gas and a liquid moving in cross-current and/or countercurrent to one another, characterised by the following features:
a) a number of trays (1) which are disposed adjacent one another and substantially vertically and which
b) have stamped-out parts (2) in the form of ducts or duct portions for the passage of the fluid flows;
c) the centre lines of the parts (2) in each individual tray (1) deviate from the vertical and therefore facilitate spreading out of the fluid flows between any two adjacent trays (1) transversely to the main flow directions of the exchange fluids,
d) in order to convey the fluid flows between the liquid inlet and the liquid outlet, the parts (2 extend substantially in a straight line relative to the plane of the two main directions in which the trays (1) extend, and
e) the trays having the ducts (2) are so deformed additionally transversely to the two main directions in which the trays (1) extend, such directions being disposed in a vertical plane, that the spatial pattern of the centre lines of the ducts (2) also departs from the vertical plane defined by the main directions in which the trays (1) extend.

2. An element according to claim 1, characterised in that the trays (2) have a semi-circular or sinusoidal or serpentine wave shape.

3. An element according to claim 1, characterised in that the trays (1) also have a fine profiling (3) of the surface.

4. An element according to at least one of claims 1 to 3, characterised in that the central axes (M1, M2) of the waviness of the trays (1) extend vertically between the entry and exit in accordance with the main flow direction of the liquid.

5. An element according to at least one of claims 1 to 4, characterised in that the wavy trays (1) have duct-like stamped-out parts (2) for the passage of the fluid flows, such stamped-out parts extending at an angle to the vertical main direction of flow of the liquid.

6. An element according to claims 5,
characterised in that the stamped-out channel portions (2) preferably have an angle of 30° to the vertical main flow direction of the liquid.

## Revendications (Revendications pour l'(les) Etat(s) contractant(s) suivant(s): BE, ES, FR, GB, NL)

1. Chicane de ruissellement pour transférer de la chaleur et/ou de la matière entre un gaz et un liquide qui sont acheminés par courants croisés et/ou à contre-courant, caractérisée par :
a) une pluralité de plaques (1) qui sont disposées sensiblement verticalement les unes à côté des autres et qui
b) comportent des empreintes (2) en forme de canaux ou de portions de canaux pour la circulation des courants de fluides indiqués ;
c) les axes médians des empreintes de canaux (2) de chacune des plaques (1) s'écartent de la verticale et permettent ainsi aux courants de fluides s'écoulant entre deux plaques voisines (1) de se propager transversalement aux directions principales d'écoulement des fluides participant au transfert ;
d) les plaques (1) pourvues des empreintes de canaux (2) sont, en outre, déformées transversalement aux deux directions principales de propagation des plaques (1), lesdites directions étant situées dans un plan vertical, de sorte que le tracé spatial des axes médians des empreintes de canaux (2) s'écarte également du plan vertical défini par les directions principales de propagation des plaques (1).

2. Chicane de ruissellement selon la revendication 1, caractérisée en ce que les plaques (1) sont ondulées en forme de demi-cercle, de sinusoïde ou de lacet.

3. Chicane de ruissellement selon la revendication 1 ou 2, caractérisée en ce que les plaques (1) présentent également un profilage fin (3) de la surface.

4. Chicane de ruissellement selon au moins une des revendications 1 à 3, caractérisée en ce que les axes médians (M1, M2) de l'ondulation des plaques (1) pourvues d'empreintes de canaux (2) s'étendent verticalement entre l'entrée et la sortie selon la direction principale d'écoulement du liquide.

5. Chicane de ruissellement selon au moins une des revendications 1 à 4, caractérisée en ce que les plaques ondulées (1) comportent, pour la circulation des courants de fluides indiqués, des empreintes de canaux (2) qui s'étendent sensiblement en forme de sinusoïde ou de lacet entre l'entrée de liquide et la sortie de liquide.

6. Chicane de ruissellement selon au moins une des revendications 1 à 5, caractérisée en ce que les plaques ondulées (1) comportent, pour la circulation des courants de fluides indiqués, des empreintes de canaux (2) qui s'étendent de manière oblique et sensiblement rectiligne par rapport à la direction principale verticale d'écoulement du liquide.

7. Chicane de ruissellement selon au moins une des revendications 1 à 6, caractérisée en ce que les empreintes de canaux (2) présentent, à l'entrée et à la sortie des courants de fluides, de préférence un angle de 30° par rapport à la direction principale verticale d'écoulement du liquide.

## Revendications (Revendications pour l'(les) Etat(s) contractant(s) suivant(s): AT, CH, LI, DE, IT)

1. Chicane de ruissellement pour transférer de la chaleur et/ou de la matière entre un gaz et un liquide qui sont acheminés par courants croisés et/ ou à contre-courant, caractérisée par :
a) une pluralité de plaques (1) qui sont disposées sensiblement verticalement les unes à côté des autres et qui
b) comportent des empreintes (2) en forme de canaux ou de portions de canaux pour la circulation des courants de fluides indiqués ;
c) les axes médians des empreintes de canaux (2) de chacune des plaques (1) s'écartent de la verticale et permettent ainsi aux courants de fluides s'écoulant entre deux plaques voisines (1) de se propager transversalement aux directions principales d'écoulement des fluides participant au transfert ;
d) pour la circulation des courants de fluide entre l'entrée de liquide et la sortie de liquide, les empreintes de canaux (2) ont un tracé sensiblement rectiligne par rapport au plan des deux directions principales d'extension des plaques (1) ;
e) les plaques (1) pourvues des empreintes de canaux (2) sont, en outre, déformées transversalement aux deux directions principales d'extension des plaques (1), lesdites directions étant situées dans un plan vertical, de sorte que le tracé spatial des axes médians des empreintes de canaux (2) s'écarte également du plan vertical défini par les directions principales d'extension des plaques (1).

2. Chicane de ruissellement selon la revendication 1, caractérisée en ce que les plaques (1) sont ondulées en forme de demi-cercle, de sinusoïde ou de lacet.

3. Chicane de ruissellement selon la revendication 1 ou 2, caractérisée en ce que les plaques (1) présentent également un profilage fin (3) de la surface.

4. Chicane de ruissellement selon au moins une des revendications 1 à 3, caractérisée en ce que les axes médians (M1, M2) de l'ondulation des plaques (1) pourvues d'empreintes de canaux (2) s'étendent verticalement entre l'entrée et la sortie selon la direction principale d'écoulement du liquide.

5. Chicane de ruissellement selon au moins une des revendications 1 à 4, caractérisée en ce que les plaques ondulées (1) comportent, pour la circulation des courants de fluides indiqués, des empreintes de canaux (2) qui s'étendent de manière oblique par rapport à la direction principale verticale d'écoulement du liquide.

6. Chicane de ruissellement selon la revendication 5, caractérisée en ce que les empreintes de canaux (2) présentent de préférence un angle de 30° par rapport à la direction principale verticale d'écoulement du liquide.
